# EUROPEAN PATENT APPLICATION

(11) **EP 1 154 265 A1**
(43) Date of publication of application: **14.11.2001**
(21) Application number: 01109638.5
(22) Date of filing: 19.04.2001
(51) Int. Cl.: G01N 27/447

(54) **Separation of antithrombin III variants by cyclodextrin-modified micellar electrokinetic chromatography**

(30) Priority: 08.05.2000 EP 00109182
(71) Applicant: Aventis Behring GmbH, 35002 Marburg (DE)
(72) Inventor: Dönges, Reiner, 35094 Lahntal-Caldern (DE); Römisch, Jürgen, Dr., 35041 Marburg (DE); Stauss, Harald, 35232 Dautphetal (DE)

(57) **Abstract**

A process is disclosed for the baseline separation of the AT-III variants α and β which process uses a cyclodextrin-modified micellar electrokinetic chromatography. The separation is performed in the presence of a buffer solution comprising boric acid, an anionic tensid, β-cyclodextrin and an aliphatic diamine.

## Description

Subject of the present application is a process for a baseline separation of the antithrombin III variants α and β.

One of the most challenging analytical tasks in modern bioanalysis is still the separation and characterization of proteins and peptides. The difficulties mainly derive from the complex structure of proteins, requiring several analytical techniques to get sufficient information. Conventionally used methods for protein separation are SDS-PAGE, SEC, MS, RP-HPLC etc. (1).

Although several modes of high performance liquid chromatography are well established, capillary electrophoresis (CE) and its different modes, namely capillary zone electrophoresis (CZE), SDS molecular weight capillary electrophoresis, capillary isolectric focusing (CIEF), capillary gel electrophoresis (CGE) and last but not least micellar electrokinetic chromatography (MEKC) are rapidly gaining in acceptance (2).

Concerning the plasma glycoprotein antithrombin III (AT-III) which is responsible for thrombin inhibition in the blood coagulation cascade, a special analytical problem lies in the fact that it consists of two variants the α- and the β-form which are different in their affinity to the polysaccharide heparin. The availability of a reliable method to quantify AT-IIIα and β in e.g. plasma-derived concentrates and body fluids will help to elucidate the currently not fully understood existence of the two isoforms.

In order to define the quality of AT-III it is therefore meaningful to characterise it by the measurement of its portions of the α- and β-variants and to develop methods for their separation.

This problem could be solved according to the present invention by a process for the baseline separation of the α- and β-variants of AT-III using Cyclodextrin micellar electrokinetic chromatography.

AT-III is a single chain plasma glycoprotein that inhibits most proteinases of the coagulation cascade, such as thrombin which is its principal physiological target and thus plays a major role in the regulation of blood clotting. Inhibition of thrombin by AT-III occurs by the formation of a stable equimolar complex between inhibitor and protease. The rate of thrombin inactivation is enhanced by catalytic amounts of the sulfated polysaccharide heparin. Located in the N-terminal domain of the protein the binding of heparin results in a conformational change in AT-III [3, 4].

The primary structure of human AT-III (antithrombin α) has a molecular weight of 58000 Da and an isoelectric point of 4.85. In addition it could be shown that there is also present an AT-III variant with increased heparin affinity which is called antithrombin β (molecular weight 55000 DA, pl = 5.0) which is deprived of a carbohydrate side chain.

Capillary electrophoresis (CE) combines the quantification and handling benefits of HPLC with the separating power of conventional electrophoretic techniques. As compared with HPLC, CE offers an important advantage, namely a wide variation of analytical conditions.

Free solution capillary electrophoresis, also called capillary zone electrophoresis (CZE), is the most common mode of capillary electroseparation, because it is performed in a capillary filled only with an electrolyte solution at a selected pH value and ionic composition. CZE is applicable to a wide range of charged substances including pharmaceuticals, amino acids, peptides and proteins. The separation in CZE is based on the differences in the electrophoretic mobilities resulting in different velocities of migration of ionic species in the electrophoretic buffer contained in the capillary.

Whereas by CZE only ionic analytes are separated, in micellar electrokinetic chromatography (MEKC) an additional mechanism for selectivity is introduced. MEKC is a high-resolution technique using surfactant micelles to provide a charged vehicle which performs an electrophoretic separation of both neutral and charged solutes. Typically anionic surfactants are included in the electrophoretic buffer [8].

Normally when surfactant molecules exceed their critical micelle concentration (CMC), micelles are formed in aqueous solution with the hydrophobic regions pointing inward and the hydrophilic heads pointing outward into the aqueous solution [6]. The formation of micelles results in a pseudostationary phase created by the hydrophobic interior of the negatively charged micellar structure which itself migrates towards the anode and therefore competes with the stronger electroendosmotic flow (EOF) which is towards the cathode. The sample molecules introduced into the EOF will therefore distribute between the micelle and the electrophoretic buffer whereas the separation rate is determined by both distribution and electrophoretic effects. Furthermore differences in the distribution of charged and hydrophobic sites of the solute might strongly influence the separation, because solutes interact with micelles via various mechanisms including hydrophobic, electrostatic, and hydrogen bonding.

So MEKC is based on micellar solubilization and electrophoretic migration of the micelle, that is the solutes are separated by the differential distribution between the micelle and the surrounding aqueous phase as well as the differential migration of the two phases. From the viewpoint of the separation principle this analytical method can be classified as an individual tool of chromatographic technique, although it is performed with a capillary electrophoresis instrument [5].

Micellar electrokinetic separations in capillaries were first introduced by Terabe and have been extended by Sepaniak, Fujiwara, Honda and others to pharmaceutical preparations [16].

The distribution of the solutes between micelles can be influenced by chiral selectors like cyclodextrins. Cyclodextrins (CDs) are oligosaccharides having 6 - 8 glucopyranose units connected in a ring. Their cyclic structure gives them a hydrophobic cavity. Solutes can enter these cavities forming an inclusion complex. The addition of small amounts of chiral additives to the MEKC buffer which leads to a special separation method called Cyclodextrin-modified micellar electrokinetic chromatography (CD-MEKC), seems to have several consequences, the most important being a change, induced by stereospecific interactions to the distribution of the analyte between the micelle and the aqueous buffer phase [10]. The chiral selectivity process is in competition with micellar inclusion and distribution, thus CDs are added to the MEKC electrolyte to reduce the retention of hydrophobic solutes and to stabilize the selectivity.

The choice of the optimal run buffer is the most important thing in the CE separation of proteins. The type of the buffer, its ionic strength and its pH-value must meet the specific requirements which are defined by the properties of the compounds to be separated.

Whereas the separation of small peptides in the CZE mode is well established it appears that no single strategy is applicable for large peptides and proteins. This is due largely to the complexity and diversity associated with these biomolecules. In solution, proteins exhibit acid-base behaviour and their net charge is dependent on the pH of the buffer. The net charge is zero at the characteristic isoelectric point where the number of positive charges is balanced precisely by the number of negative charges. Working above and below the pl value which is nearly 5 for AT-III, will change the solute charge and cause the solute to migrate either before or after the EOF.

At a buffer pH of approx. 3 the AT-III possesses a positive charge and is comigrating together with the suppressed EOF towards the cathode. In this case, when working with low pH conditions, the capillary wall is protonated while the AT-III molecules are positively charged, thus minimizing the electrostatic adsorption on the capillary wall. At an acidic buffer pH the EOF is very low and the AT-III molecules are mainly forced moving towards the cathode by their positive charge.

At basic pH whereas the pl of the AT-III is less than the pH of the buffer the electrophoretic mobility is towards the anode. At high pH a relatively high EOF is generated and finally the predominating EOF prevents the negatively charged - AT-III from migrating back off the capillary and carries the solute towards the cathode, passing the detector window just before reaching the cathodic side. Both the AT-III and the capillary wall are negatively charged and the adsorption process is minimized as a result of a charge repulsion effect.

It has now been found that the process for a baseline separation of the antithrombin variants by means of the Cyclodextrin-modified micellar electrokinetic chromatography gives excellent results if it is performed in the presence of a buffer solution comprising
- boric acid
- an anionic tensid
- β-cyclodextrin and
- an aliphatic diamine
at a pH-value between 8 to 10.

Prefered is a buffer solution which contains boric acid in an ammount 40 to 80 mMol/l, an anionic tensid, which preferably is sodium-dodecylsulfat, in an amount of 20 to 60 mMol/l, β-cyclodextrin in an amount of 10 to 30 mMol/l and as an aliphatic diamine the 1,5-diaminopentane in an amount of 0,5 to 5 mMol/l.

The borate anion is of basic importance, as it may complex with vicinal hydroxyl groups under alkaline conditions and thus plays a critical role in stereoselective interactions [11].

The α and β variants of AT-III have similar size-to-charge ratios, making their electrophoretic mobilities virtually identical. This requires the anionic surfactant like sodium dodecylsulfate (SDS) to be added to enhance selectivity through hydrophobic and electrostatic interactions with the micelles being introduced. Hydrophobic interactions play a major role in defining the native tertiary structure of proteins, because proteins consist of polar and non-polar amino acids. Typical recommended surfactant concentrations in MEKC are between 20 and 50 mM. Increasing the surfactant concentration increases the retention time, in consequence of the interaction with the increased number of micelles.

In order to successfully separate the AT-III variants α and β from each other, finally a CD-MEKC method based on borate as the basic buffer substance was established in which SDS acts as an anionic surfactant and β-cyclodextrin additionally introduces selectivity behaviour. Finally a small amount of the cationic 1,5-diaminopentane was added to prevent any adsorption effects between solute and capillary wall down to the last detail.

It is to be noted that the critical micelle concentration (CMC) which is 8 mM for the most frequently used surfactant SDS plays a major role in MEKC, because below the CMC which by the way decreases with the length of the alkyl chain of the particular surfactant molecule, the sample solubility will remain virtually the same as without surfactant. Nevertheless the distribution of the monomeric surfactant molecules should not be neglected, because especially in the case of CD-MEKC analysis, SDS monomers can have their hydrophobic tails coincluded in the cyclodextrin cavity along with the analyte. Concerning the previously mentioned potential adsorption effects SDS is of great advantage because the ionic repulsion between the hydrophilic moieties of the surface-active molecules and the silanol groups seems to be strong enough to prevent any adsorption, and thus the zeta potential remains constant [7].

High efficiencies as well as a simple and straight forwarded process are the main advantages of using chiral surfactants in the MEKC mode over the traditional HPCE methods. Through the addition of micelle-forming surfactants (such as SDS) and inclusion-forming compounds (such as β-cyclodextrin) to the HPCE electrolyte, a dynamic distribution mechanism is established. As it is well known, that optimal conditions for the CE separation are extremely protein specific the reported fast and inexpensive method demonstrates that CD-MEKC can be successfully applied to the resolution and quantitation of the AT-III variants α and β.

The results of the separation process according to the invention could be shown as follows:
A mixture containing approx. equal amounts of the AT-III variants α and β was used.

The α- and β-variants of AT-III were not properly resolved by customary free zone electrophoresis. Finally two broad peaks were obtained, but in consequence of a rather long analysis time. This is demonstrated by Fig. 1a.

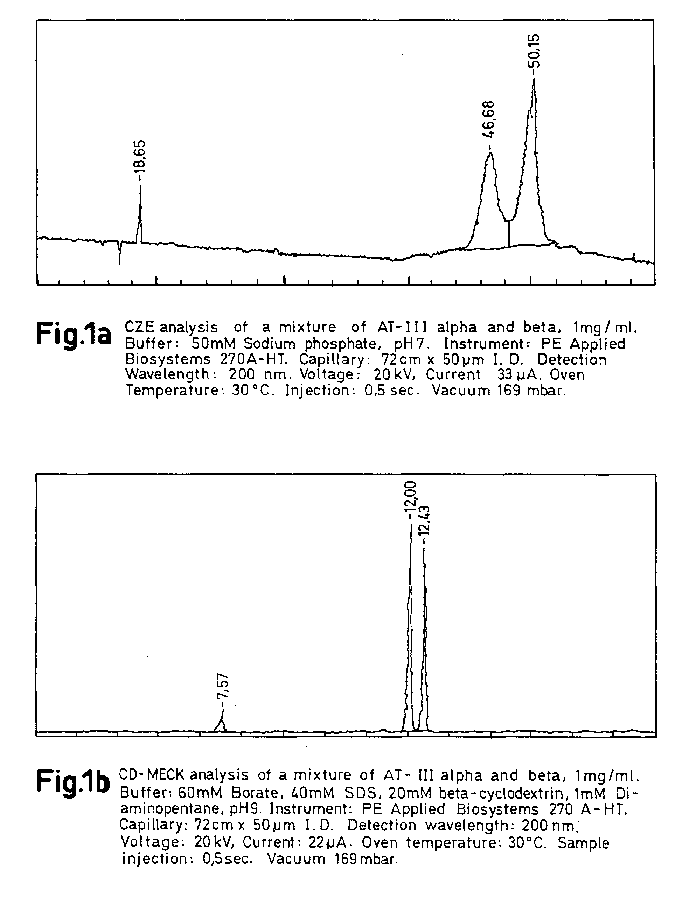

Only the use of aqueous solutions containing micelles and cyclodextrins as moving phases in capillary electrophoresis facilitates a separation which provides a high resolution resulting in two baseline separated peaks (Fig. 1b). This selectivity is mainly based upon the interaction of the analyte with the micelle whereas the cyclodextrin plays a supporting role. And among the most commonly employed inorganic salts in MEKC, borate was the most appropriate for the present application. Using this CD-MEKC buffer system a separation voltage of 20 kV, resulting in a current of less than 30 µA could be applied without excessive Joule heating. Both compounds, AT-III α and AT-III β exhibit excellent peak shape and the migration order was found to be α and β. Interpreting the migration order, the SDS micelles thus appear to have interacted more effectively with the β variant, which is of smaller size. This corresponds to the experience that MEKC is more suitable for smaller proteins. The larger proteins are less prone to penetrate into micelles. Certainly the hydrophobicity of some proteins increases as their size increases, but the migration normally found is in the order of increasing size. Thus, the migration order is making sense, because the interaction of solute and surfactant is the dominating separation mechanism concerning the present application. Here, the interaction of the analyte with the cyclodextrin cavity is of minor importance. β-cyclodextrin which can influence the distribution of the solutes between micelles is of importance for stabilizing the separation process and enhancing the resolution, especially in the case of plasma derived samples.

The isoelectric points of AT-III (pl 4.8 - 5.1) and the molecular mass of the AT-III variants (Mᵣ 55,000 and 58,000 resp.) are close to those of human serum albumin (pl 4.9 , Mᵣ 67,000). In further experiments it could be shown that plasmaproteins like albumin which can interfere with the AT-III analysis, were solubilized by the micelles employed and hence in line with the separation principle explained before eluted later than the AT-III variants.

Besides plasma sample impurities of smaller size which are able to absorb UV light, elute much earlier than AT-III. Moreover plasma samples of lower AT-III concentration, e.g. 0.1 mg/ml can also be analyzed directly, requiring a longer injection time, and therefore a reduced migration time. A pretreatment of the plasma sample ist not necessary which is of great advantage.

From all the data presented it can be seen that this separation technique is of significance for the differentiation of the AT-III variants α and β. The reproducibility within a series of runs was found to be improved by automatically changing the run buffer on the autosampler side of the PE Applied Biosystems 270A-HT instrument more frequently (up to ten injections per run buffer vial). Concerning the same fact, the 2^{nd} instrument used within the present application, namely the HP^{3D}CE system is equipped with an automated buffer replenishment station which can access any vial before or during an analysis, empty and refill it with fresh buffer from a large volume reservoir, thus improving the reproducibility by avoiding buffer depletion situations.

### Example

A buffer solution was prepared by dissolving first 0,37 g boric acid, 1,15 g SDS, 2,27 g β-cyclodextrin, and 12 µl 1,5-diaminopentane in approx. 90 ml Milli-Q water (Waters Millipore). The resulting solution was adjusted to pH 9 with 1 M sodium hydroxid. Finally the volume was completed to 100 ml, which result in the following buffer system:
60 mM boric acid
40 mM sodium dodecylsulfate
20 mM β-cyclodextrin
1 mM diaminopentane
adjusted to pH 9.

The buffer solution is usually stored at 2 to 8°C. Prior to use the solution needs to warmup to room temperature followed by a filtration step through an 0,2 micronfilter. As far as possible the solution should be degassed for the prevention of spikes in the electropherogram.

The instrumentation used for the majority of the measurements was a PE Applied Biosystems 270A-HT Capillary Electrophoresis System, equipped with a monochromatic UV detector. Detection in CE is a significant challenge as a result of the small dimensions of the capillary and the nanoliter sample volumes. An adequate sample concentration of about 1 mg/ml, but not less than 0.1 mg/ml in the case of AT-III samples is therefore necessary, presuming an ideal injection time of 0.5 sec. and 5 sec. resp., corresponding to a volume of approx. 0.5 nl and 5 nl respectively. Concerning the fact that higher wavelengths give lower sensitivity and on the other hand most CZE and MEKC buffers do not absorb at low wavelengths, 200 nm can be used for general purpose detection [13].

A benefit of the air thermostating system used in the PE Applied Biosystems HPCE system is instrumental simplicity and ease of use. Further the system isolates the meandering installed capillary from changes in ambient temperatures. In consideration of the so called critical micelle temperature (CMT) in MEKC, whereas more and more of the remaining monomeric surfactant molecules go into solution while the temperature increases, the capillary was thermostatted at 30°C. This oven temperature, also proposed by the manufacturer, proved to be a desirable condition.

In HPCE smaller diameter capillaries (25 µm) are more effective concerning heat dissipation, but give reduced sensitivity with UV-detection because of the reduced pathlength. On the other hand enlarging the inner diameter to 75 µm leads to a decrease in resolution. So from a heat dissipating and resolution perspective, the use of a fused silica capillary with an inner diameter of 50 µm is advantegeous. From an analysis time perspective, capillaries as short as possible should be used, but this is often in contrast to a good resolution. Longer capillaries can produce the separation of more components. But this necessarily contributes to a band broadening because of longer separation times. So the capillary length needs to be adapted on the specific separation.

A polymide-coated fused silica capillary, 72 cm (50 cm effective length, respective to the detector) x 50 µm I.D. x 363 µm O.D. (Supelco, Bellefonte, PA, USA) was used in the present application. The detection window was created by glowing off the polymide-coating using a CE Capillary Burner (Elektrokinetic Technologies, Broxburn, UK).

Prior to use a brand-new capillary was equilibrated with 1 M sodium hydroxide for 30 minutes, with 0.1 M sodium hydroxide for 15 minutes, and finally with Milli-Q water. All flushing solutions should be degassed properly using a vacuum pump equipment. Between individual runs and before each injection resp., the capillary was rinsed with Milli-Q water for 2 min., with 0.1 M sodium hydroxide for 2 min., and with the separation buffer for 6 minutes to prepare the capillary for the immediate separation. Concerning the storage of the capillary only used for this specific separation, flushing the capillary with Milli-Q water for 10 minutes and then flushing from an empty vial for 5 min. is the standard practice. The 2nd rinse fills the capillary with air and prepares the capillary for a dry storage without plugging.

All samples were introduced at the anode side of the capillary by vacuum injection, using a 5-inch vacuum (169 mbar), applied injection time as mentioned above. A constant separation voltage of 20 kV was applied, generating a current of 22 µA for the CD-MEKC runs. Data collection was recorded via a Perkin Elmer 900 series interface. All peak information (migration time, peak area and height, as well as the area percent values) was obtained through the Nelson PC-integrator software version 5.1.

The robustness of the separation method was finally tested by using a HPCE instrument of another manufacturer. A comparison shows that the results achieved with the HP^{3D}CE instrument (Hewlett Packard) are in a good agreement with those obtained with the ABI 270A-HT instrument (Perkin Elmer), although the operational conditions are slightly different in consequence of construction and functioning of the instruments.

The HP^{3D}CE system is also a versatile, fully automated system which houses a high-voltage power supply, a carousel for autosampling, a constantly pressure controlled injection system, an on-capillary high-sensitivity diode array detector, a buffer replenishment station and a capillary cartridge, thermostatted through a high-velocity air flow regulated by a Peltier element. The HP^{3D}CE ChemStation comprises instrument control and data handling software.

In contrast to the established separation conditions described above, the capillary length was 70 cm (61.5 cm effective length). Furthermore the samples were loaded by using an injection pressure of 50 mbar. Injection time was 1 sec presuming an AT-III sample concentration of 1 mg/ml.

### References

[1]
   **Eva Szökö,** "Protein and peptide analysis by capillary zone electrophoresis and micellar electrokinetic chromatography"
   Electrophoresis 18 (1997) 74-81
[2]
   **Maria Petersson, Karin Walhagen, Anders Nilsson, Karl-Gustav Wahlund, Staffan Nilsson** "Separation of a bioactive cyclic peptide and its oligomeric forms by micellar electrokinetic chromatography" Journal of Chromatography A 769 (1997) 301-306
[3]
   **Ingemar Björk, Karin Ylinenjärvi, Steven T. Olson, Peter Hermentin, Harald S. Couradt and Gerd Zettlmeissl**
   "Decreased affinity of recombinant antithrombin for heparin due to increased glycosylation" Biochem. Journal 286 (1992) 793-800
[4]
   **L Mourey, JP Samama, NI Delarue, J Choay, JC Lormeau, M Petitou, D Moras** "Antithrombin III: structural and functional aspects" Biochimie **72 (1990) 599-608**
[5]
   **Alison E. Bretnall, Graham S. Clarke** "Investigation and optimisation of the use of organic modifiers in micellar electrokinetic chromatography" Journal of Chromatography A 716 (1995) 49-55
[6]
   **Yan Xu** "Capillary Electrophoresis" Analytical Chemistry Vol. 65, No. 12 (1993) 425-433
[7]
   **Hiroyuld Nishi, Tsukasa Fukuyama, Masaaki Matsuo and Shigeru Terabe** "Chiral Separation of diltiazem, trimetoquinol and related compounds by micellar electrokinetic chromatography with bile salts" Journal of Chromatography 515 (1990) 233-243
[8]
   **Merle A. Evenson and John E. Wiktorowicz** "Automated Capillary Electrophoresis Applied to Therapeutic Drug Monitoring" Clinical Chemistry Vol. 38, No. 9 (1992) 1847-1852
[9]
   **Robert Weinberger, Ira S. Lurie** "Micellar Electrokinetic Capillary Chromatography of Illicit Drug Substances" Analytical Chemistry 63 (1991) 823-827
[10]
   **J.E. Noroski, D.J. Mayo and M. Moran** "Determination of the enantiomer of a cholesterol-lowering drug by cyclodextrin-modified micellar electrokinetic chromatography" Journal of Pharmaceutical & Biomedical Analysis Vol. 13, No. 1(1 995) 45-52
[11]
   **J.C. Jacquier, P.L. Desbene** "Determination of critical micelle concentration by capillary electrophoresis. Theoretical approach and validation" Journal of Chromatography A 718 (1995) 167-175
[12]
   **P. Hermentin, R. Doenges, R. Witzel, C.H. Hokke, J.P.K. Vliegenthart, H.S. Conradt, M. Nimtz, and D. Brazel**
   "A Strategy for the Mapping of N-Glycans by High Performance Capillary Electrophoresis" Analytical Biochemistry 221 (1994) 29-41
[13]
   **Malgorzata Jaworska, Zofia Szulinska, Malgorzata Wilk, Jadwiga Tautt** "Capillary electrophoretic separation of N-acetylcysteine and its impurities as a method for quality control of pharmaceuticals" Journal of Chromatography A Vol. 853, No. 1-2 (1999) 479-485
[14]
   **Oscar-Werner Reif, Ruth Freitag** "Control of the cultivation process of antithrombin III and its characterization by capillary electrophoresis" Journal of Chromatography A 680 (1994) 383-394
[15]
   **Andrea Buchacher, Petra Schulz, Jacek Choromanski, Horst Schwinn, Djuro Josic** "High-performance capillary electrophoresis for in-process control in the production of antithrombin III and human clotting factor IX" Journal of Chromatography A 802 (1998) 355-366
[16]
   **William E. Werner, David M. Demorest, Junko Stevens, and John E. Wiktorowicz** "Size-Dependent Separation of Proteins Denatured in SDS by Capillary Electrophoresis Using a Replaceable Sieving Matrix" Analytical Biochemistry 212 (1993) 253-258
[17]
   **Shelley R. Rabel and John F. Stobaugh** "Applications of Capillary Electrophoresis in Pharmaceutical Analysis"
   Pharmaceutical Research Vol. 10, No. 2 (1993) 171-186

## Claims

1. Process for a baseline separation of the AT-III variants α and β, **characterized in that** the separation is performed by a Cyclodextrin-modified micellar electrokinetic chromatography.

2. Process as claimed in claim 1, **characterized in that** the α- and β-variants of native AT-III are separated without any derivatization.

3. Process as claimed in claims 1 and 2, **characterized in that** the separation by means of the Cyclodextrin-modified micellar electrokinetic chromatography is performed in the presence of a buffer solution comprising
- boric acid,
- an anionic tensid
- β-cyclodextrin and
- an aliphatic diamine
at a pH-value between 8 to 10.

4. Process as claimed in Claims 1 to 3, **characterized in that** the boric acid is used in an amount of 40 to 80 mMol/l.

5. Process as claimed in claims 1 to 4, **characterized in that** as an anionic tensid sodium-dodecylsulfat is used in an amount of 20 to 60 mMol/l.

6. Process as claimed in claims 1 to 5, **characterized in that** the β-cyclodextrin is used in an amount of 10 to 30 mMol/l.

7. Process as claimed in claims 1 to 6, **characterized in that** as an aliphatic diamine the 1,5-diaminopentane is used in an amount of 0,5 to 5 mMol/l.
